# EUROPÄISCHE PATENTSCHRIFT

(11) **EP 2 576 272 B1**
(45) Veröffentlichungstag und Bekanntmachung des Hinweises auf die Patenterteilung: **13.06.2018**
(21) Anmeldenummer: 11718936.5
(22) Anmeldetag: 18.04.2011
(51) Int. Cl.: B60L 1/00, B60L 7/14, B60L 9/28, B60L 15/38, B60L 11/00, B60L 11/18

(54) **VERFAHREN ZUM TRANSPORTIEREN EINES OBJEKTES, FAHRZEUG, ANLAGE**
METHOD FOR TRANSPORTING AN OBJECT, VEHICLE AND INSTALLATION
PROCÉDÉ DE TRANSPORT D'UN OBJET, VÉHICULE, INSTALLATION

(30) Priorität: 27.05.2010 DE 102010021705
(43) Veröffentlichungstag der Anmeldung: 10.04.2013
(73) Patentinhaber: Sew-Eurodrive GmbH & Co. KG, 76646 Bruchsal (DE)
(72) Erfinder: SCHMIDT, Josef, 76676 Graben-Neudorf (DE)
(74) Vertreter: Tüngler, Eberhard
(86) Internationale Anmeldenummer: PCT/EP2011/001958
(87) Internationale Veröffentlichungsnummer: WO 2011/147508

(56) Entgegenhaltungen:
- WO-A2-2008/051611
- CA-A1- 1 164 076
- DE-A1-102009 028 565
- US-A- 6 129 025
- US-A1- 2009 138 149

## Beschreibung

Die Erfindung betrifft ein **Verfahren zum Transportieren eines Objektes, ein Fahrzeug und eine Anlage**.

Es ist bekannt Fahrzeuge mit einem elektrischen Antrieb auszustatten, der Räder des Fahrzeuges derart antreibt, dass das Fahrzeug entlang einer Bodenfläche verfahrbar ist und der elektrische Antrieb aus einem Energiespeicher versorgbar ist. Das Dokument WO2008051611 ist als nächstliegender Stand der technik angesehen und offenbart die Merkmale der Präambel des unabhängigen Anspruchs 1. Der Erfindung liegt daher die Aufgabe zugrunde, die Flexibilität beim Lösen von logistischen Aufgaben weiterzubilden.

Erfindungsgemäß wird die Aufgabe bei dem Fahrzeug nach den in Anspruch 1, bei der Anlage nach den in Anspruch 9 und bei dem Verfahren zum Betreiben einer Anlage nach den in Anspruch 16 angegebenen Merkmalen gelöst.

Wichtige Merkmale bei dem **Verfahren zum Transportieren eines Objektes, das von Fahrzeugen jeweils aufnehmbar oder abladbar ist, sind, dass die Fahrzeuge jeweils einen Antrieb aufweist zum Verfahren, wobei die Fahrzeuge entlang einer Linie, insbesondere gedachten Linie, insbesondere gerade oder gekrümmt verlaufende Fahrbahn, angeordnet sind,**
**wobei in einem ersten Schritt ein erstes Fahrzeug bis zu einem jeweiligen, entlang der Linie benachbarten Fahrzeug verfahren wird und in einem zweiten Schritt das von dem ersten Fahrzeug aufgenommene Objekt an das entlang der Linie benachbarte Fahrzeug übergeben wird,**
**insbesondere wobei in einem dritten Schritt das erste Fahrzeug bis zu dem jeweils anderen, entlang der Linie benachbarten Fahrzeug verfahren wird,**
**insbesondere wobei die Schritte wiederholt werden.**

**Von Vorteil ist dabei, dass eine lange Transportstrecke bewältigbar ist, wobei mehrere Fahrzeuge einsetzbar sind auf der Transportstrecke und nur eine einzige Bahn, also keine Bahn für Hinbewegung mit zusätzlicher Bahn für Rückbewegung, notwendig ist. Der Flächenverbrauch ist also gering. Außerdem ist das vom Fahrzeug aufgenommene Objekt schon während des Verfahrens des Fahrzeugs mittels der auf dem Fahrzeug installierten Förderrollen weiterbewegbar, also schneller bewegbar als das Fahrzeug sich bewegt. Dabei transportieren die Förderrollen das Objekt vom auf dem Fahrzeug angeordneten Aufnahmebereich zu einem auf dem Fahrzeug angeordneten Abgabebereich. Der Abgabebereich ist dabei in Linienrichtung dem benachbarten Fahrzeug zugewandt. Nach dem Erreichen des benachbarten Fahrzeugs ist somit eine sehr schnelle Abgabe des Objekts an das benachbarte Fahrzeug.**

**Bei einer vorteilhaften Ausgestaltung ist an mindestens einer Seitenfläche jedes Fahrzeugs eine Wicklung, insbesondere Spulenwicklung, angeordnet,**
**wobei das Fahrzeug einen ersten Energiespeicher und einen zusätzlichen Energiespeicher aufweist,**
**wobei von der Wicklung aufgenommene Energie an den zusätzlichen Energiespeicher übertragbar ist,**
**wobei aus dem Energiespeicher zumindest der Antrieb des Fahrzeugs versorgbar ist,**
**wobei aus Energie vom zusätzlichen Energiespeicher an den ersten Energiespeicher und/oder an den Antrieb übertragbar ist. Von Vorteil ist dabei, dass in der Zeit des Aufeinandertreffens ein hoher Energiestrom induktiv, also kontaktlos und/oder berührungslos, übertragbar ist, der von dem zusätzlichen Energiespeicher aufnehmbar ist. Die Übertragung von dem zusätzlichen Energiespeicher zur Batterie dauert dann entsprechend lange. Insbesondere ist der zusätzliche Energiespeicher derart dimensioniert, dass er eine derartige energiemenge aufnehmen kann, dass zumindest die nach dem Entfernen der beiden zur Energieübertragung aufeinander getroffenen Fahrzeuge vom Antrieb des Fahrzeugs bis zum Aufeinandertreffen mit dem zweiten benachbarten Fahrzeug benötigte Energie speicherbar ist.**

**Somit ist also so viel Energie im zusätzlichen Energiespeicher speicherbar, dass zumindest eine Hinbewegung der Hin- und Her-Pendelbewegung entlang des Linienabschnittes vom Antrieb des Fahrzeugs bei Versorgung aus dem zusätzlichen Energiespeicher ausführbar ist.**

**Bei einer vorteilhaften Ausgestaltung ist der zusätzliche Energiespeicher einen um mindestens Zehn mal größeren maximal zulässigen Ladestrom aufweist als der erste Energiespeicher des Fahrzeugs,**
**insbesondere wobei der erste Energiespeicher eine Batterie oder ein Akkumulator ist. Von Vorteil ist dabei, dass die Energie langfristig verlustfrei speicherbar ist.**

**Bei einer vorteilhaften Ausgestaltung wird bei Aufeinandertreffen der benachbarten Fahrzeuge Energie von einem ersten auf das andere übertragen, insbesondere mittels induktiv gekoppelter Wicklungen. Von Vorteil ist dabei, dass eine kontaktfreie Übertragung ermöglicht ist.**

Wichtige Merkmale der Erfindung bei dem Fahrzeug sind, dass an der Unterseite Antriebsmittel angeordnet sind,
wobei an mindestens einer Seitenfläche eine Wicklung, insbesondere Spulenwicklung, angeordnet ist.

Von Vorteil ist dabei, dass eine induktive Versorgung des Fahrzeuges an einer Seitenfläche ermöglicht ist. Somit ist Energie von einem weiteren solchen Fahrzeug aufnehmbar oder an ein weiteres Fahrzeug abgebbar. Alternativ ist auch Energie von einer stationär angebrachten Wicklung aufnehmbar und somit der Energiespeicher beladbar. Statt dem Beladen des Energiespeichers ist die Energie auch dem Antrieb, also den Antriebsmitteln, des Fahrzeugs zuführbar, ein Energiespeicher des Fahrzeugs aufladbar, einer vom Fahrzeug umfassten Fördereinheit zuführbar oder einem weiteren Fahrzeug über eine weitere Wicklung zuführbar.

Bei einer vorteilhaften Ausgestaltung weisen die Antriebsmittel zumindest ein Rad oder eine Rolle auf, das beziehungsweise die von einem elektrischen Motor antreibbar ist, der am Fahrzeug angeordnet ist. Von Vorteil ist dabei, dass ein Verfahren über der Bodenfläche ausführbar ist. Die Erfindung umfasst auch schienengeführte Fahrzeuge, also nicht zweidimensional sondern nur eindimensional verfahrbare Fahrzeuge.

Bei einer vorteilhaften Ausgestaltung ist der elektrische Motor von einem Umrichter speisbar, welcher aus einem Energiespeicher versorgbar ist, insbesondere wobei Energiespeicher und Umrichter am Fahrzeug angeordnet sind. Von Vorteil ist dabei, dass ein Verfahren des Fahrzeugs und/oder ein Betreiben einer Fördereinheit mit der Energie ausführbar ist

Bei einer vorteilhaften Ausgestaltung weist das Fahrzeug eine Fördereinheit auf, insbesondere an seiner Oberseite, insbesondere wobei die Fördereinheit von dem Energiespeicher versorgbar ist,

insbesondere wobei die Fördereinheit eine Rollenförderbahn aufweist. Von Vorteil ist dabei, dass das Fahrzeug auf eine Zielposition in der Anlage verfahrbar ist und während der Bewegung dorthin und/oder an der Zielposition eine Förderaufgabe, also eine logistische Aufgabe, durchführbar ist. Beispielsweise wird ein Objekt von einer Seite des Fahrzeugs auf die gegenüberliegende Seite des Fahrzeugs befördert. Ein anderes Beispiel ist ein Sortieren, bei dem ein Objekt von einer ersten Seite des Fahrzeugs an eine zweite oder dritte Seite des Fahrzeugs befördert wird, wobei die Entscheidung für die Förderung an die zweite oder dritte Seite von einem Rechner getroffen wird, dem die Signale eines Sensors zugeführt werden, mit welchem Eigenschaften und/oder Informationen des Objekts detektiert werden, beispielsweise Informationen, die in einem Barcode, RFID-Tag oder elektronischem Typenschild gespeichert sind oder Eigenschaften, wie Gewicht, Materialeigenschaften oder dergleichen.

Bei einer vorteilhaften Ausgestaltung ist die Wicklungsachse der Wicklung senkrecht zur Normalenrichtung der Bodenfläche ausgerichtet, auf der das Fahrzeug verfahrbar ist. Von Vorteil ist dabei, dass somit die Wicklung beispielsweise als Ringwicklung ausführbar ist und ein weiteres Fahrzeug mit einer ebensolchen Wicklung derart heranführbar ist, dass die Wicklungen parallel und mit geringem Abstand zueinander positionierbar sind, so dass eine gute induktive Kopplung zwischen den beiden Wicklungen erreichbar ist.

Bei einer vorteilhaften Ausgestaltung sind am Fahrzeug mindestens zwei, drei oder vier Wicklungen angeordnet, deren Wicklungsachsen in einer Ebene liegen. Von Vorteil ist dabei, dass das Fahrzeug beispielsweise quaderförmig ausführbar ist und somit an jeder Seite in einfacher Weise induktiv ankoppelbar ist an ein baugleiches oder ähnliches Fahrzeug. Somit ist der Aufbau eines Verbandes aus Modulen ermöglicht, wobei jedes Modul als Fahrzeug ausgeführt ist. Das Koppeln der Module ist dadurch ausführbar, dass ein als Master fungierendes Fahrzeug weitere, als Slave fungierende Fahrzeuge führt und diese somit synchronisiert bewegt werden. Innerhalb des Verbandes halten dann die Fahrzeuge den jeweiligen relativen Abstand zu ihren direkt benachbarten Fahrzeugen möglichst konstant, wodurch auch eine konstante induktive Kopplung der seitlich angebrachten Wicklungen erreichbar ist und daher auch eine entsprechend effektiver Energieübertragung.

Bei einer vorteilhaften Ausgestaltung ist eine der Wicklungen von einem Wechselrichter mit Wechselstrom beaufschlagbar, der aus dem Energiespeicher versorgbar ist,
insbesondere wobei der Wechselrichter ein DC/AC-Wandler ist. Von Vorteil ist dabei, dass ein Wechselstrom verfügbar ist und somit ein Fahrzeug eine seiner Wicklungen als Primärwicklung eines Transformators betreiben kann, wobei die zugehörige Sekundärwicklung am direkt benachbarten Fahrzeug angeordnet ist und der induktiv übertragene Strom einem AC/DC-Wandler zugeführt wird, insbesondere einer Gleichrichteranordnung.

Bei einer vorteilhaften Ausgestaltung weist der Energiespeicher eine Batterie, einen Akkumulator, einen Kondensator, einen Doppelschicht-Kondensator und/oder einen Ultracap auf. Von Vorteil ist dabei, dass große Mengen Energie speicherbar sind und somit längerfristige logistische Aufträge ausführbar sind. Beim Abbremsen des Fahrantriebs und/oder der Fördereinheit des Fahrzeuges wird Energie durch motorisches Bremsen erzeugt und ebenfalls dem Energiespeicher zugeführt. Hierbei eignen sich besonders die Doppelschicht-Kondensatoren und/oder Ultracaps, da ihnen kurzfristig große Ströme zuführbar sind.

Bei einer vorteilhaften Ausgestaltung ist aus einer der Wicklungen ein AC/DC-Wandler, insbesondere umfassend einen Gleichrichter, speisbar, so dass der Energiespeicher aufladbar und/oder der umrichtergespeiste Motor versorgbar ist. Von Vorteil ist dabei, dass nicht nur der Fahrantrieb und die Fördereinheit des Fahrzeuges aus dem AC/DC-Wandler versorgbar sind sondern auch der Energiespeicher aufladbar ist, insbesondere bei entsprechendem Energieüberschuss.

Bei einer vorteilhaften Ausgestaltung ist im Fahrzeug Schalter angeordnet sind, mittels welcher die Richtung des Energiefluss zwischen Wicklung und Energiespeicher steuerbar,

insbesondere wobei Wicklung und Energiespeicher über einen rückspeisefähigen Wechselrichter verbunden sind, insbesondere wobei der rückspeisefähige Wechselrichter zwei Halbbrücken aufweist, die jeweils einen oberen und einen unteren Leistungshalbleiterschalter aufweisen, wobei jedem Schalter eine Diode parallel zugeschaltet ist,
insbesondere wobei die Leistungshalbleiterschalter pulsweitenmoduliert ansteuerbar sind von einer Steuerelektronik des Fahrzeugs. Von Vorteil ist dabei, dass somit eine bidirektionale Energiestromführung ermöglicht ist. Dies bedeutet, dass jede Wicklung entweder als Primärwicklung oder als Sekundärwicklung eines Transformators betreibbar ist. Bei Vorhandensein mehrerer seitlicher Wicklungen am Fahrzeug ist es vorteilhaft, weitere Schalter vorzugsehen, die ein Verbinden oder Trennen einer jeweiligen Wicklung mit dem rückspeisefähigen Wechselrichter ermöglicht.

Bei einer vorteilhaften Ausgestaltung weist die Wicklung einen Spulenkern auf, insbesondere einen Ferritkern,
insbesondere wobei der Spulenkern derart im Fahrzeug angeordnet ist und Schenkel des Kerns derart zur Außenfläche des Fahrzeugs ausgerichtet sind, dass bei entsprechendem Ausrichten eines weiteren Fahrzeugs mit einem solchen Kern eine geschlossene Führung eines von einer Wicklung des Fahrzeugs oder des weiteren Fahrzeugs erzeugten Magnetfeldes im Kern erreichbar ist, insbesondere ohne Luftspalt oder mit geringfügigem Luftspalt. Von Vorteil ist dabei, dass eine besonders starke induktive Kopplung erreichbar ist. Bei ungenügender Kopplung ist es vorteilhaft, die als Sekundärwicklung fungierende Wicklung mit einer Kapazität derart in Reihe oder parallel zu verbinden, dass die zugehörige Resonanzfrequenz im Wesentlichen der Frequenz des induzierten Stromes entspricht. Mittels dieser Resonanz ist eine hoher Wirkungsgrad erreichbar - auch bei schwankenden Luftspalten.

Bei einer vorteilhaften Ausgestaltung weist das Fahrzeug ein Positionserfassungssystem auf, insbesondere umfassend ein GPS System und/oder ein Bilderkennungssystem zur Erkennung von in der Anlage angeordneten Markierungen. Von Vorteil ist dabei, dass das Fahrzeug möglichst autonom betreibbar ist und somit nur geringe Datenmengen zu übertragen sind.

Bei einer vorteilhaften Ausgestaltung weist das Fahrzeug eine Datenaustauschverbindung auf, insbesondere eine berührungslose Datenverbindung, zu einem zentralen Rechner der Anlage und/oder zu mindestens einem weiteren Fahrzeug aufweist. Von Vorteil ist dabei, dass vom zentralen Rechner die Aufträge, also logistische Aufgaben übermittelbar sind. Außerdem sind auch Daten übermittelbar, die zur Positionsbestimmung des Fahrzeuges verwendbar sind, oder Daten, die die Positionen anderer Fahrzeuge betreffen.

Bei einer vorteilhaften Ausgestaltung weist das Fahrzeug an der Unterseite eine Sekundärwicklung auf, insbesondere welche induktiv an einen am Boden angeordneten Primärleiter ankoppelbar ist, so dass der Sekundärwicklung eine Kapazität derart in Reihe und/oder parallel zugeschaltet ist, dass die zugehörige Resonanzfrequenz der Frequenz eines in den Primärleiter eingespeisten Wechselstroms im Wesentlichen gleicht. Von Vorteil ist dabei, dass an einer speziellen Position, wo der Primärleiter im Boden vorgesehen ist, oder auch während der Bewegung des Fahrzeuges entlang eines im Boden langgestreckt verlegten Primärleiters das Fahrzeug induktiv versorgbar ist.

Wichtige Merkmale bei der Anlage mit mindestens einem zuvor beschriebenen Fahrzeug sind, dass im Boden ein Primärleiter langgestreckt verlegt ist, so dass das Fahrzeug induktiv aus dem Primärleiter versorgbar ist, insbesondere während der Fahrt. Von Vorteil ist dabei, dass auch bei entleertem Energiespeicher ein Bewegen des Fahrzeugs und ein Betreiben der Fördereinheit ermöglicht ist.

Wichtige Merkmale bei dem Verfahren zum Betreiben einer Anlage mit obengenannten Fahrzeugen sind, dass ein Verband von Fahrzeugen gebildet wird zur Lösung einer gemeinsamen logistischen Aufgabe,
wobei Energie aus dem Energiespeicher eines Fahrzeugs des Verbandes übertragen wird an ein weiteres Fahrzeug des Verbandes,
wobei der Energiefluss über induktive Kopplungen zwischen den Fahrzeugen des Verbandes geführt wird. Von Vorteil ist dabei, dass die Energiereserven des Verbandes gemeinsam von den Fahrzeugen des Verbandes nutzbar sind.

Bei einer vorteilhaften Ausgestaltung werden die Fahrzeuge synchronisiert verfahren, insbesondere wobei eines der Fahrzeuge des Verbandes als Master fungiert und die weiteren Fahrzeuges des Verbandes als Slave fungieren. Von Vorteil ist dabei, dass der Verband synchronisiert bewegbar ist, also wie eine Einheit, und die Fahrzeuge in Master-Slave-Regelung betreibbar sind.

Bei einer vorteilhaften Ausgestaltung reicht die in den Energiespeichern der Fahrzeuge des Verbands gespeicherte gesamte Energiemenge für die Ausführung der logistischen Aufgabe durch die Fahrzeuge des Verbands aus. Von Vorteil ist dabei, dass die für die Aufgabe insgesamt benötigte Energiemenge bestimmt wird und nur dann ausgeführt wird, wenn die in den Energiespeichers des Verbandes gespeicherte Energiemenge ausreicht.

Bei einer vorteilhaften Ausgestaltung entspricht die von einem Primärleiter an ein Fahrzeug oder an mehrere Fahrzeuge übermittelte elektrische Leistung der für die Ausführung der logistischen Aufgabe durch die Fahrzeuge des Verbands notwendigen Leistung oder übersteigt diese. Von Vorteil ist dabei, dass die an ein oder mehrere Fahrzeuge induktiv vom Boden her zur Sekundärwicklung des jeweiligen Fahrzeugs zugeführte Leistung innerhalb des Verbandes weiterverteilbar ist und somit auch von nicht induktiv aus dem am Boden vorgesehenen Primäreiter versorgbaren Fahrzeugen nutzbar ist. Somit muss nicht an jeder Stelle in der Anlage im Boden ein Primärleiter vorgesehen werden sondern es genügt, wenn wenigstens ein Fahrzeug des Verbandes an einer Stelle positioniert ist, das induktiv versorgbar ist. Somit profitiert dann der gesamte Verband von dieser zugeführten elektrischen Leistung. Ergänzend kann - insbesondere auch bei benötigten Spitzenleistung - auf die Energiespeicher des Verbandes zurückgegriffen werden.

Bei einer vorteilhaften Ausgestaltung reicht die von einem Primärleiter an ein Fahrzeug oder an mehrere Fahrzeuge übermittelte elektrische Leistung der für die Ausführung der logistischen Aufgabe durch die Fahrzeuge des Verbands notwendigen Leistung unter Berücksichtigung der von den Energiespeichern der Fahrzeuge des Verbandes lieferbare Leistung aus. Von Vorteil ist dabei, dass länger dauernde Aufgaben ausführbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

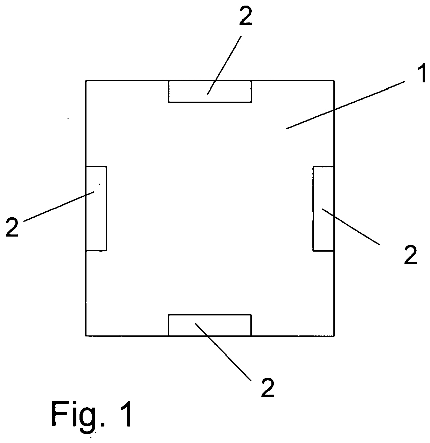

In der Figur 1 ist ein erfindungsgemäßes Fahrzeug (1) schematisch in Ansicht von oben gezeigt, wobei die auf dem Fahrzeug (1) angeordnete Fördereinrichtung nicht gezeigt ist, mit welcher eine Förderaufgabe lösbar ist.

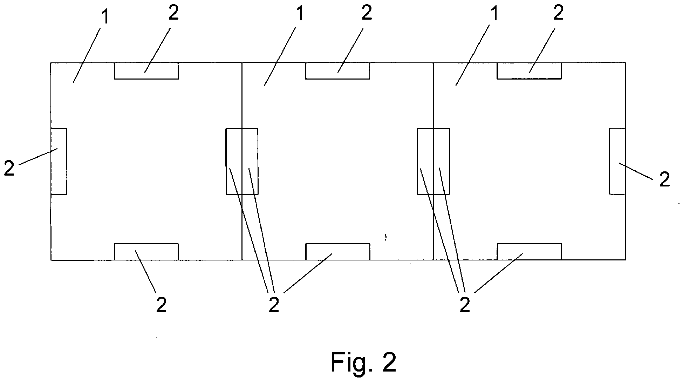

In der Figur 2 sind in gleicher Ansicht mehrere solche Fahrzeuge (1) aneinander gekoppelt vorgesehen, so dass sie ein Cluster, also einen Verband, bilden. Dieser Verband, also eine Gruppe synchronisiert bewegter Fahrzeuge (1) oder zusammen aufgestellter Fahrzeuge (1) löst eine gemeinsame Förderaufgabe.

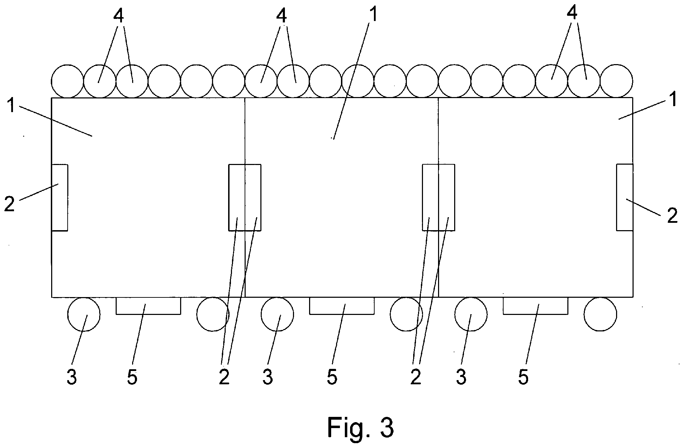

In der Figur 3 ist eine Seitenansicht des Verbandes gezeigt, bei dem die Rollen (3) des Antriebs des Fahrzeugs (1) sichtbar sind, mit welchen das Fahrzeug (1) über dem Boden verfahrbar ist und die oben angeordnete Fördereinheit mit Förderrollen (4) zum Transportieren von Objekten, also Lösen einer Förderaufgabe.

Als Objekt, insbesondere Transportgut, ist beispielhaft ein Karton einsetzbar.

Das jeweilige Fahrzeug (1) ist innerhalb einer Anlage bewegbar.

An der Unterseite des Fahrzeugs (1) ist eine Sekundärwicklung (5) angeordnet, mit welcher das Fahrzeug (1) induktiv aus einem im Boden verlegten Primärleiter versorgbar ist. Alternativ zum Verlegen des Primärleiters im Boden ist auch eine Ladematte verwendbar, die als flache Matte ausgeführt ist und eine Wicklung eines Primärleiters enthält, also eine Primärwicklung.

In jedem Fall wird in den Primärleiter ein Wechselstrom mit einer Mittelfrequenz zwischen (10) und 500 kHz eingeprägt und der Sekundärwicklung (5) eine Kapazität derart in Reihe oder parallel zugeschaltet, dass die zugehörige Resonanzfrequenz im Wesentlichen der Mittelfrequenz gleicht. Auf diese Weise ist auch bei schwacher Kopplung, wie beispielsweise wegen Luftspalt zwischen Primärleiter und Sekundärwicklung (5), ein hoher Wirkungsgrad erreichbar.

Das Fahrzeug nach Figur 1 weist eine Steuerelektronik auf, die eine berührungslose Datenverbindung zu einem zentralen Rechner der Anlage aufweist. Die Datenverbindung ist beispielsweise per Funkwellen, Infrarot oder durch Aufmodulation höherfrequenter Stromanteile auf den Strom im Primärleiter und/oder Sekundärwicklung, ausführbar.

Darüber hinaus weist das Fahrzeug (1) ein Positionserfassungssystem auf und ist somit in der Lage seine Position innerhalb der Anlage zu bestimmen. Hierzu ist entweder ein nach Art eines GPS mittels Funkwellen arbeitendes System oder ein Triangulationssystem verwendbar. Alternativ ist auch ein Positionserfassungs-System mittels Bilderkennung verwendbar, wobei innerhalb der Anlage Markierungen angebracht werden, welche von einer Kamera des Fahrzeuges (1) erkennbar sind und somit der Abstand erfassbar ist.

Mittels der von einem elektrischen Antrieb in Drehbewegung versetzbaren Rollen (3) ist das Fahrzeug verfahrbar, insbesondere in beliebige Richtungen entlang der Bodenoberfläche.

Mittels der Fördereinheit (4) ist ein Objekt transportierbar, wobei die Fördereinheit hierbei Sensoren zum Erkennen des Objektes aufweist, so dass die Förderrollen (4) der Fördereinheit erst bei Eintreffen oder Nahekommen des Objektes einschaltbar sind und somit Energieeffizient betreibbar sind.

Die Fördereinheit (4) ist dabei derart aufgebaut, dass sie entweder eine lineare Förderung bewirkt oder auch eine abzweigende Förderung bewirkbar ist, also entsprechend einer Weiche ein entlang der Fördereinheit (4) gefördertes Objekt seitlich abgibt.

Die Fahrzeuge (1) sind gemäß Figur 2 in einen Verband einbringbar. Hierzu ist beispielsweise von dem zentralen Rechner der Anlage vorgebbar, welche Fahrzeuge (1) zu dem jeweiligen Verband sich anschließen sollen. Alternativ ist auch ein quasi Herbeirufen von weiteren Fahrzeugen (1) durch ein erstes Fahrzeug 1 ausführbar. Hierzu bekommt zunächst das erste Fahrzeug 1 eine erste Transportaufgabe und nimmt danach über die Datenverbindung den Kontakt auf zu anderen Fahrzeugen (1). Wenn diese keine weitere Aufgabe haben und somit frei sind, schließen sich diese mit dem ersten Fahrzeug (1) zu dem Verband zusammen. Der Verband ist bei einer ersten Aufgabe stationär, also unbeweglich, als Ganzes zusammengestellt. Hierbei ordnen sich die Fahrzeuge (1) nebeneinander an und können somit eine Förderaufgabe erledigen. Beispielsweise sind hierbei Objekte an einer ersten Position von der Fördereinheit (4) eines ersten Fahrzeuges (1) aufzunehmen und werden dann von diesem weitergefördert auf ein benachbartes Fahrzeug (1). Dieses oder ein weiteres Fahrzeug (1) des Verbandes weist einen Sensor auf, der Eigenschaften des Objektes erkennen kann, beispielsweise Barcode-Informationen oder RFID-Informationen des Objektes. Je nach Art der vom Sensor erkannten Information wird das Objekt gerade oder seitlich weitergefördert. Auf diese Weise ist also eine Sortieraufgabe als Förderaufgabe lösbar.

Jedes Fahrzeug (1) hat zwar einen Energiespeicher, aus dem der Antrieb des Fahrzeugs (1) und/oder die Fördereinheit (4) versorgbar ist.

Durch die gleichartige Ausführung von Fahrzeugen (1) ist ein schneller und einfacher Austausch sowie ein modulares Zusammenstellen ermöglicht.

Da der Primärleiter nicht im gesamten Bereich der Anlage im Boden verlegt ist und auch nicht der gesamte Boden mit Ladematten belegt ist, erhalten nicht alle Fahrzeuge (1) Energie. Zur Durchleitung von Energie an die weiteren Fahrzeuge (1) weist jedes Fahrzeug (1) an seinen Seiten Spulenwicklungen (2) auf, mit denen eine jeweilige Spulenwicklung (2) eines anderen Fahrzeugs (1) induktiv koppelbar ist. Über diese induktive Kopplung nach Art eines Transformators ist somit Energie übertragbar von demjenigen Fahrzeug (1), das genügend große Ressourcen aufweist.

Somit ist Energie vom Primärleiter an das erste Fahrzeug (1) und von dort über die seitliche Wicklung an ein nächstes Fahrzeug weiterübertragbar. Auf diese Weise ist ein gesamter Verband mit Energie versorgbar.

Die jeweilige Spulenwicklung (2) ist um einen E-förmigen oder U-förmigen Ferritkern herumgewickelt vorgesehen, so dass dieser Ferritkern zusammen mit dem entsprechenden Ferritkern des benachbarten Fahrzeugs (1) das Magnetfeld des Transformators ohne oder nur mit geringfügigem Luftspalt führt. Also sind die Endbereiche der Schenkel des jeweiligen E oder U aufeinander zu orientiert vorgesehen.

Bei einer anderen Aufgabe, schließt sich der Verband zusammen, indem die Fahrzeuge (1) synchronisiert bewegt werden. Somit ist ein an einer ersten Position aufgenommenes Objekt vom gesamten Verband transportierbar, wobei die Gewichtskraft sich aufteilt, auf die verschiedenen Fahrzeuge (1) des Verbandes, wenn das Objekt groß ist. Der gesamte Verband ist somit bewegbar zu einer zweiten Position, bei der das Objekt abladbar ist, insbesondere mittels der Fördereinheit (4). Bei der Durchführung dieser anderen Aufgabe ist es zulässig, dass die Energiespeicher der Fahrzeuge (1) verschieden stark beladen sind. Wenn während der Durchführung keine Energiezuführ aus dem Primärleiter an den Verband ausführbar ist, ist allerdings notwendig, dass die gesamte in den Energiespeichern der Fahrzeuge (1) gespeicherte Energiemenge ausreicht für die Durchführung der Aufgabe. Zum Verteilen der in Energiespeichern mancher Fahrzeuge (1) vorhandenen Energie an andere Fahrzeuge (1) des Verbandes dienen die mittels der induktiven Kopplungen hergestellten transformatorischen Anordnungen zwischen den Fahrzeugen (1). Denn über die hierzu eingesetzten Spulenwicklungen (2) die an den jeweiligen zueinander zugewandten Seitenflächen der nächst benachbarten Fahrzeuge (1) eingesetzt sind, ist Energie von einem jeweiligen Fahrzeug (1) ans nächst benachbarte Fahrzeug (1) übertragbar.

Im Energie abgebenden Fahrzeug ist hierzu ein DC/AC Wandler angeordnet, welcher aus dem Energiespeicher des Fahrzeugs versorgbar ist und dessen Energiestrom auf diejenige Spulenwicklung (2) oder diejenigen Spulenwicklungen (2) gelenkt wird, die als Primärwicklung der transformatorischen Anordnung vorgesehen ist. Die als Sekundärwicklung (2) fungierende Spulenwicklung (2) des Energie empfangenden Fahrzeugs (1) weist einen AC/DC Wandler auf, um den dortigen Energiespeicher zu laden beziehungsweise den Antrieb der Fördereinheit (4) und/oder des Fahrzeugs (1) zu versorgen. Denn es ist auch vorsehbar, dass während der Bewegung des Verbandes das Objekt von den Fördereinheiten (4) des Verbandes weiter gefördert wird und somit Antriebe der Fahrzeuge (1) und Fördereinheiten (4) gleichzeitig betreibbar sind.

Bei einem Fahrzeug (1), das Energie von einem ersten nächst benachbarten zu einem zweiten nächst benachbarten Fahrzeug (1) durchleiten soll, ist auch ein direktes Durchschalten des an seiner ersten seitlichen Spulenwicklung (2) empfangenen Wechselstromes an seine zweite seitliche Spulenwicklung (2) ausführbar. Somit werden Verluste der Wandler minimiert.

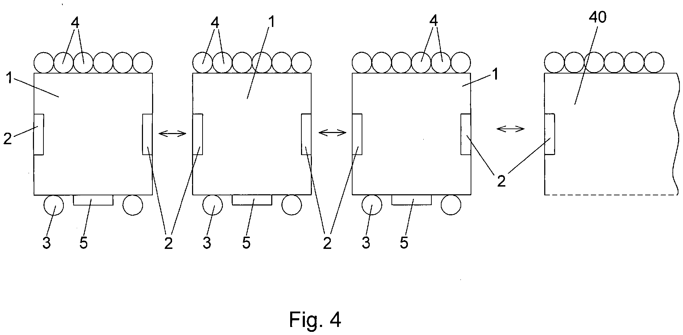

In Figur 4 ist ein Verfahren zum Betreiben einer Anlage mit Fahrzeugen (1) gezeigt, wobei die Fahrzeuge (1) keinen Verband insgesamt bilden, sondern entlang einer gerade oder gekrümmt verlaufenden Fahrbahn angeordnet sind. Dabei bewegen sich die Fahrzeuge (1) entlang **der Fahrbahn jeweils solange hin und her, bis jeweils zwei benachbarte Fahrzeuge (1) aufeinander treffen, um das von einem der Fahrzeuge (1) transportierte Objekt an das andere zu übergeben. Dabei wird dann das Objekt mit den Förderrollen (4) vom ersten Fahrzeug (1) zum zweiten Fahrzeug (1) übergeben.**

**Während der Zeitdauer dieses Aufeinandertreffens und somit auch während der Übergabe sind die Sekundärwicklungen (5) der beiden Fahrzeuge (1) induktiv gekoppelt und es wird Energie übertragen. Da die Zeit des Aufeinandertreffens und der Übergabe sehr kurz ist, wird ein sehr hoher Energiestrom in dieser Zeit übertragen. Für die schnelle Aufnahme dieses Energiestroms ist in jedem Fahrzeug (1) ein zusätzlicher Energiespeicher vorgesehen, der beispielshaft als Kondensator, Doppelschichtkondensator, Ultracap-Kondensator oder dergleichen ausgeführt ist.**
**Der zusätzliche Energiespeicher weist also einen um mindestens Zehn mal größeren maximal zulässigen Ladestrom auf als die Batterie oder der Akkumulator des Fahrzeugs (1). Die Energie ist dann, nach dem Aufeinandertreffen, aus dem zusätzlichen Energiespeicher in die Batterie oder den Akkumulator des Fahrzeugs (1) überführbar, wobei hierbei ein kleiner Energiestrom fließt, so dass das Überführen der gesamten Energiemenge in die Batterie oder den Akkumulator des Fahrzeugs (1) länger dauert.**

**Aus dem zusätzlichen Energiespeicher ist auch der Antrieb und/oder die Förderrollen (4) des Fahrzeuges (1) versorgbar, so dass ein Teil der aufgenommenen Energie auch direkt, also ohne Zwischenspeicherung in der Batterie oder dem Akkumulator des Fahrzeugs (1), an diese Verbraucher weitergebbar ist.**

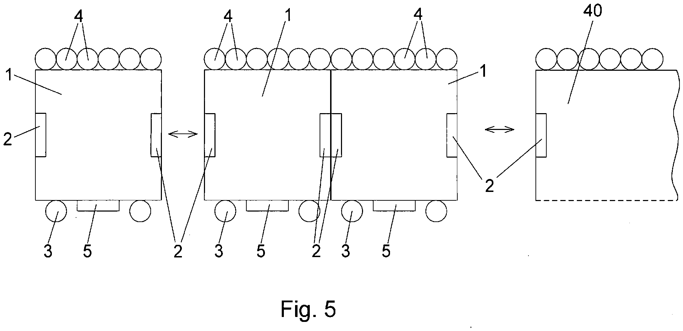

**In** Figur 5 **ist gezeigt, wie zwei Fahrzeuge (1) aufeinander treffen und kurzzeitig einen Verband bilden.**

**Mittels der Hin- und Her-Pendelbewegungen der Fahrzeuge (1) entlang der Linie sind auch lange Transportstrecken mit wenigen Fahrzeugen (1) ausführbar. Wichtig ist dabei weiter, dass die Fahrzeuge (1) nur entlang der Fahrbahn aufgestellt sind und somit nur wenig Fläche beansprucht wird. Wenn der Transport eines Objektes von nur einem Fahrzeug (1) ausgeführt werden müsste, würde das Fahrzeug (1) eine Hin-Fahrbahn und eine Rück-Fahrbahn benötigen. Erfindungsgemäß ist aber nur eine einzige Bahn notwendig, welche die Fahrbahn umfasst.**

**Bei längeren Objekten, die nur sinnvoll von zwei Fahrzeugen (1) als Verband transportierbar sind, ist auch bis zur Übergabe ein Transport mit zwei als Verband gekoppelt verfahrbaren Fahrzeugen (1) bildbar. In diesem Fall wird bei dem Aufeinandertreffen auf ein drittes Fahrzeug (1), das dritte Fahrzeug (1) in den Verband eingekoppelt und ein erstes Fahrzeug (1) aus dem Verband entkoppelt. Das entkoppelte Fahrzeug (1) fährt dann wieder entlang der Fahrbahn zurück, wohingegen der neue Verband entlang der Fahrbahn weiterfährt. Am Ende des genannten Transports wird gemäß den** Figuren 4 **und** 5 **das Objekt an einer in der Anlage stationär angeordneten Abladestation (40) übergeben, die ebenfalls Förderrollen (4) aufweist. Entsprechendes gilt auch für längere Objekte, die nur mit drei oder mehr Fahrzeugen (1) transportiert werden dürfen.**

### Bezugszeichenliste

1 Fahrzeug, Roboter
2 Wicklung
3 Rollen
4 Förderrollen, Fördereinheit
5 Sekundärwicklung
40 Abladestation

## Patentansprüche

1. **Verfahren zum Transportieren eines Objektes, das von Fahrzeugen** (1) **jeweils aufnehmbar oder abladbar ist,**
**wobei die Fahrzeuge** (1) **jeweils** eine oben angeordnete Fördereinheit mit Förderrollen (4) zum Transportieren von Objekten, eine Steuerelektronik, die eine berührungslose Datenverbindung zu einem Zentralrechner aufweist und **einen Antrieb** mit Rollen (3) aufweist, mit welchen das Fahrzeug (1) über dem Boden verfahrbar ist, **wobei die Fahrzeuge** (1) **entlang einer gerade oder gekrümmt** verlaufenden **Fahrbahn,** innerhalb einer Anlage bewegbar **angeordnet sind,**
**wobei in einem ersten Schritt ein erstes Fahrzeug** (1) **bis zu einem jeweiligen, entlang der** Fahrbahn **benachbarten Fahrzeug** (1) **verfahren wird und in einem zweiten Schritt das von dem ersten Fahrzeug** (1) **aufgenommene Objekt an das entlang der** Fahrbahn **benachbarte Fahrzeug** (1) **übergeben wird,**
**wobei in einem dritten Schritt das erste Fahrzeug** (1) **bis zu dem jeweils anderen, entlang der** Fahrbahn **benachbarten Fahrzeug** (1) **verfahren wird, wobei die Schritte wiederholt werden, dadurch gekennzeichnet, dass das Fahrzeug** (1) **an seiner Oberseite** die **Fördereinheit** (4) **aufweist, so dass das Objekt weitergefördert wird auf das jeweils benachbarte Fahrzeug** (1) **oder von einem solchen aufgenommen wird,**
**wobei eines der Fahrzeuge** (1) **an seiner Unterseite eine Sekundärwicklung** (5) **aufweist, welche induktiv an einen am Boden angeordneten Primärleiter ankoppelbar ist, wobei der Sekundärwicklung** (5) **eine Kapazität derart in Reihe** oder **parallel zugeschaltet ist, dass die zugehörige Resonanzfrequenz der Frequenz eines in den Primärleiter eingespeisten Wechselstroms gleicht,**
**wobei an mindestens einer Seitenfläche jedes Fahrzeugs** (1) **eine** Spulenwicklung (2) **angeordnet ist, wobei das Fahrzeug** (1) **einen ersten Energiespeicher aufweist, wobei von der** Spulenwicklung (2) **eines jeweiligen Fahrzeugs** (1) **aufgenommene Energie an den ersten Energiespeicher des Fahrzeugs** (1) **übertragbar ist, wobei aus dem ersten Energiespeicher zumindest der Antrieb des Fahrzeugs** (1) **versorgbar ist,** wobei bei Aufeinandertreffen der benachbarten Fahrzeuge (1) Energie von einem ersten der beiden aufeinandertreffenden Fahrzeuge (1) auf das andere Fahrzeug (1) übertragen wird mittels der dann induktiv gekoppelten Spulenwicklungen (2).

2. **Verfahren nach** Anspruch 1, **dadurch gekennzeichnet, dass**
**an mindestens einer Seitenfläche jedes Fahrzeugs** (1) **eine** Spulenwicklung (2) **angeordnet ist, wobei das Fahrzeug** (1) **einen ersten Energiespeicher und einen zusätzlichen Energiespeicher aufweist,**
**wobei von der** Spulenwicklung (2) **aufgenommene Energie an den zusätzlichen Energiespeicher übertragbar ist,**
**wobei aus dem Energiespeicher zumindest der Antrieb des** Fahrzeugs (1) versorgbar **ist, wobei Energie vom zusätzlichen Energiespeicher an den ersten Energiespeicher und/oder an den Antrieb übertragbar ist.**

3. **Verfahren nach mindestens einem der vorangegangenen Ansprüche,**
**dadurch gekennzeichnet, dass**
**der zusätzliche Energiespeicher einen um mindestens Zehn mal größeren maximal zulässigen Ladestrom aufweist als der erste Energiespeicher des** Fahrzeugs (1), **wobei der erste Energiespeicher eine Batterie oder ein Akkumulator ist.**

4. **Verfahren nach mindestens einem der vorangegangenen Ansprüche,**
**dadurch gekennzeichnet, dass**
ein Verband von Fahrzeugen (1) gebildet wird zur Lösung einer gemeinsamen logistischen Aufgabe,
wobei Energie aus dem Energiespeicher eines Fahrzeugs (1) des Verbandes übertragen wird an ein weiteres Fahrzeug (1) des Verbandes, wobei der Energiefluss über induktive Kopplungen zwischen den Fahrzeugen (1) des Verbandes geführt wird, und **dass zwei oder mehr Fahrzeuge** (1) **synchronisiert entlang der** Fahrbahn **verfahren werden,** wobei eines der Fahrzeuge (1) des Verbandes als Master fungiert und die weiteren Fahrzeuges (1) des Verbandes als Slave fungieren.

5. Verfahren nach mindestens einem der vorangegangenen Ansprüche, **dadurch gekennzeichnet, dass**
die in den Energiespeichern der Fahrzeuge (1) des Verbands gespeicherte gesamte Energiemenge für die Ausführung der **Bewegung auf das benachbarte Fahrzeug** (1) **zu,** durch die Fahrzeuge (1) des Verbands ausreicht.

6. Verfahren nach mindestens einem der vorangegangenen Ansprüche,
**dadurch gekennzeichnet, dass**
die von einem Primärleiter an ein (1) oder an mehrere Fahrzeuge (1) übermittelte elektrische Leistung der für die Ausführung der logistischen Aufgabe durch die Fahrzeuge (1) des Verbands notwendigen Leistung entspricht oder diese übersteigt.

7. Verfahren nach mindestens einem der vorangegangenen Ansprüche,
**dadurch gekennzeichnet, dass**
die von einem Primärleiter an ein Fahrzeug (1) oder an mehrere Fahrzeuge (1) übermittelte elektrische Leistung der für die Ausführung der logistischen Aufgabe durch die Fahrzeuge (1) des Verbands notwendigen Leistung unter Berücksichtigung der von den Energiespeichern der Fahrzeuge (1) des Verbandes lieferbare Leistung ausreicht.

8. **Fahrzeug** (1) **zur Durchführung eines Verfahrens nach mindestens einem der vorangegangenen Ansprüche,**
wobei an der Unterseite Antriebsmittel angeordnet sind,
**dadurch gekennzeichnet, dass**
an mindestens einer Seitenfläche eine Spulenwicklung (2) angeordnet ist.

9. Fahrzeug (1) nach mindestens einem der vorangegangenen Ansprüche,
**dadurch gekennzeichnet, dass**
die Antriebsmittel zumindest ein Rad oder eine Rolle (3) aufweisen, das die von einem elektrischen Motor antreibbar ist, der am Fahrzeug (1) angeordnet ist.

10. Fahrzeug (1) nach mindestens einem der vorangegangenen Ansprüche,
**dadurch gekennzeichnet, dass**
der elektrische Motor von einem Umrichter speisbar ist, welcher aus einem Energiespeicher versorgbar ist, insbesondere wobei Energiespeicher und Umrichter am Fahrzeug (1) angeordnet sind.

11. Fahrzeug (1) nach mindestens einem der vorangegangenen Ansprüche,
**dadurch gekennzeichnet, dass**
die Fördereinheit (4) eine Rollenförderbahn aufweist.

12. Fahrzeug (1) nach mindestens einem der vorangegangenen Ansprüche,
**dadurch gekennzeichnet, dass**
die Wicklungsachse der Spulenwicklung (2) senkrecht zur Normalenrichtung der Bodenfläche ausgerichtet ist, auf der das Fahrzeug verfahrbar ist, und dass am Fahrzeug (1) mindestens zwei, drei oder vier Spulenwicklungen (2) angeordnet sind, deren Wicklungsachsen in einer Ebene liegen, und dass eine der Spulenwicklungen (2) von einem Wechselrichter mit Wechselstrom beaufschlagbar ist, der aus dem Energiespeicher versorgbar ist, wobei der Wechselrichter ein DC/AC-Wandler ist.

13. Fahrzeug (1) nach mindestens einem der vorangegangenen Ansprüche,
**dadurch gekennzeichnet, dass**
**der erste Energiespeicher eine Batterie und/oder einen Akkumulator aufweist und der zusätzliche energiespeicher einen Kondensator, einen Doppelschicht-Kondensator und/oder einen Ultracap aufweist.**

14. Fahrzeug (1) nach mindestens einem der vorangegangenen Ansprüche,
**dadurch gekennzeichnet, dass**
aus einer der Spulenwicklungen (2) ein AC/DC-Wandler, umfassend einen Gleichrichter, speisbar ist, so dass der Energiespeicher aufladbar und/oder der umrichtergespeiste Motor versorgbar ist, und dass im Fahrzeug (1) Schalter angeordnet sind, mittels welcher die Richtung des Energieflusses zwischen Spulenwicklung (2) und Energiespeicher steuerbar ist, wobei Spulenwicklung (2) und Energiespeicher über einen rückspeisefähigen Wechselrichter verbunden sind, wobei der rückspeisefähige Wechselrichter zwei Halbbrücken aufweist, die jeweils einen oberen und einen unteren Leistungshalbleiterschalter aufweisen, wobei jedem Schalter eine Diode parallel zugeschaltet ist,
wobei die Leistungshalbleiterschalter pulsweitenmoduliert ansteuerbar sind von einer Steuerelektronik des Fahrzeugs (1), und dass die Spulenwicklung (2) einen Ferritkern aufweist, wobei der Ferritkern derart im Fahrzeug (1) angeordnet ist und Schenkel des Ferritkerns derart zur Außenfläche des Fahrzeugs (1) ausgerichtet sind, dass bei entsprechendem Ausrichten eines weiteren Fahrzeugs (1) mit einem solchen Ferritkern eine geschlossene Führung eines von einer Spulenwicklung (2) des Fahrzeugs (1) oder des weiteren (1) erzeugten Magnetfeldes im Ferritkern erreichbar ist, ohne Luftspalt oder mit geringfügigem Luftspalt, und dass das Fahrzeug (1) ein Positionserfassungssystem aufweist, insbesondere umfassend ein GPS System und/oder ein Bilderkennungssystem zur Erkennung von in der Anlage angeordneten Markierungen, und dass das Fahrzeug (1) einen Datenaustauschverbindung, insbesondere eine berührungslose Datenverbindung, zu einem zentralen Rechner der Anlage und/oder zu mindestens einem weiteren Fahrzeug (1) aufweist, und dass das Fahrzeug (1) an der Unterseite eine Sekundärwicklung (5) aufweist, welche induktiv an einen am Boden angeordneten Primärleiter ankoppelbar ist, so dass der Sekundärwicklung (5) eine Kapazität derart in Reihe oder parallel zugeschaltet ist, dass die zugehörige Resonanzfrequenz der Frequenz eines in den Primärleiter eingespeisten Wechselstroms gleicht.

15. Anlage mit mindestens einem Fahrzeug (1) nach mindestens einem der vorangegangenen
Ansprüche,
**dadurch gekennzeichnet, dass**
im Boden ein Primärleiter langgestreckt, **zumindest auch entlang der** Fahrbahn verlegt ist, so dass das Fahrzeug (1) induktiv aus dem Primärleiter während der Fahrt versorgbar ist.

## Claims

1. Method for transporting an object which can each be received by or unloaded from vehicles (1),
wherein the vehicles (1) each have a top-arranged conveying unit with conveying rollers (4) for transporting objects, control electronics which have a contactless data connection to a central computer and a drive with rollers (3), with which the vehicle (1) is movable over the ground,
wherein the vehicles (1) are arranged movably within an installation along a straight- or curvedly-running travel path,
wherein in a first step a first vehicle (1) is moved up to a respective neighbouring vehicle (1) along the travel path (1) and in a second step the object received by the first vehicle (1) is transferred to the neighbouring vehicle (1) along the travel path,
wherein in a third step the first vehicle (1) is moved up to the respective other neighbouring vehicle (1) along the travel path,
wherein the steps are repeated,
**characterised in that** the vehicle (1) has at its top side the conveying unit (4), so that the object is further conveyed to the respectively neighbouring vehicle (1) or is received by such a vehicle,
wherein one of the vehicles (1) has at its bottom side a secondary winding (5), which can be inductively coupled to a primary conductor arranged on the ground, wherein a capacitance is connected in series or parallel with the secondary winding (5) in such a manner that the associated resonant frequency is equal to an alternating current fed into the primary conductor,
wherein at at least one side face of each vehicle (1) a coil winding (2) is arranged,
wherein the vehicle (1) has a first energy store,
wherein energy consumed by the coil winding (2) of a respective vehicle (1) is transmittable to the first energy store of the vehicle (1),
wherein at least the drive of the vehicle (1) can be supplied from the first energy store,
wherein when the neighbouring vehicles (1) run against one another energy is transmitted from a first of the two vehicles (1) which have run against one another to the other vehicle (1) by means of the coil windings (2) then inductively coupled.

2. Method according to claim 1,
**characterised in that**
at at least one side face of each vehicle (1) a coil winding (2) is arranged,
wherein the vehicle (1) has a first energy store and an additional energy store,
wherein energy consumed by the coil winding (2) is transmittable to the additional energy store,
wherein at least the drive of the vehicle (1) can be supplied from the energy store,
wherein energy from the additional energy store is transmittable to the first energy store and/or to the drive.

3. Method according to at least one of the preceding claims,
**characterised in that**
the additional energy store has an at least ten times greater maximum permissible charging current than the first energy store of the vehicle (1),
wherein the first energy store is a battery or an accumulator.

4. Method according to at least one of the preceding claims,
**characterised in that**
an association of vehicles (1) is formed to solve a common logistic task,
wherein energy from the energy store of a vehicle (1) of the association is transmitted to a further vehicle (1) of the association,
wherein the energy flow is led via inductive couplings between the vehicles (1) of the association,
and **in that**
two or more vehicles (1) are moved in a synchronised manner along the travel path,
wherein one of the vehicles (1) of the association acts as the master and the other vehicles (1) of the association act as the slave.

5. Method according to at least one of the preceding claims,
**characterised in that**
the total amount of energy stored in the energy stores of the vehicles (1) of the association is sufficient for performing the movement towards the neighbouring vehicle (1) by the vehicles (1) of the association.

6. Method according to at least one of the preceding claims,
**characterised in that**
the electric power transmitted by a primary conductor to one (1) or to a plurality of vehicles (1) corresponds to or exceeds the power required for performing the logistic task by the vehicles (1) of the association.

7. Method according to at least one of the preceding claims,
**characterised in that**
the electric power transmitted by a primary conductor to one vehicle (1) or to a plurality of vehicles (1) is sufficient for performing the logistic task by the vehicles (1) of the association, while taking into account the power deliverable by the energy stores of the vehicles (1) of the association.

8. Vehicle (1) for carrying out a method according to at least one of the preceding claims,
wherein drive means are arranged at the bottom side,
**characterised in that**
at at least one side face a coil winding (2) is arranged.

9. Vehicle (1) according to at least one of the preceding claims,
**characterised in that**
the drive means have at least one wheel or roller (3) which is drivable by an electric motor which is arranged on the vehicle (1) .

10. Vehicle (1) according to at least one of the preceding claims,
**characterised in that**
the electric motor can be fed by a converter which can be supplied from an energy store, in particular wherein energy store and converter are arranged on the vehicle (1).

11. Vehicle (1) according to at least one of the preceding claims,
**characterised in that**
the conveyor unit (4) has a roller conveyor path.

12. Vehicle (1) according to at least one of the preceding claims,
**characterised in that**
the winding axis of the coil winding (2) is oriented perpendicularly to the normal direction of the ground surface on which the vehicle is movable,
and **in that**
at least two, three or four coil windings (2) are arranged on the vehicle (1), the winding axes of which lie in a plane,
and **in that**
one of the coil windings (2) can be supplied by an inverter with alternating current which can be supplied from the energy store,
wherein the inverter is a DC/AC converter.

13. Vehicle (1) according to at least one of the preceding claims,
**characterised in that**
the first energy store has a battery and/or an accumulator and the additional energy store has a capacitor, a double-layer capacitor and/or an ultracap.

14. Vehicle (1) according to at least one of the preceding claims,
**characterised in that**
from one of the coil windings (2) an AC/DC converter comprising a rectifier can be fed, so that the energy store can be charged and/or the converter-fed motor can be supplied,
and **in that**
switches are arranged in the vehicle (1), by means of which the direction of the energy flow between coil winding (2) and energy store is controllable,
wherein coil winding (2) and energy store are connected via a regenerative inverter, wherein the regenerative inverter has two half-bridges which each have an upper and a lower power semiconductor switch, wherein a diode is connected in parallel with each switch,
wherein the power semiconductor switches are controllable in a pulse-width-modulated manner by control electronics of the vehicle (1),
and **in that**
the coil winding (2) has a ferrite core,
wherein the ferrite core is arranged in such a manner in the vehicle (1), and legs of the ferrite core are oriented in such a manner to the outer surface of the vehicle (1), that on appropriate orientation of a further vehicle (1) with such a ferrite core, a closed guidance of a magnetic field, generated by a coil winding (2) of the vehicle (1), or of the further (1) generated magnetic field is achievable in the ferrite core without air gap or with a slight air gap,
and **in that**
the vehicle (1) has a position detection system, in particular comprising a GPS system and/or an image recognition system for recognition of markings arranged in the installation,
and **in that**
the vehicle (1) has a data exchange connection, in particular a contactless data connection, to a central computer of the installation and/or to at least one further vehicle (1),
and **in that**
the vehicle (1) has at the bottom side a secondary winding (5) which can be coupled inductively to a primary conductor arranged on the ground, so that a capacitance is connected in series or in parallel with the secondary winding (5) in such a manner that the associated resonant frequency is equal to an alternating current fed into the primary conductor.

15. Installation having at least one vehicle (1) according to at least one of the preceding claims,
**characterised in that**
in the ground a primary conductor is laid elongated, at least also along the travel path, so that the vehicle (1) can be supplied inductively from the primary conductor while travelling.

## Revendications

1. Procédé de transport d'un objet apte à être respectivement pris en charge par des véhicules (1) ou déchargé des véhicules,
sachant que les véhicules (1) présentent respectivement une unité de transport disposée sur le dessus et dotée de rouleaux de transport (4) pour transporter des objets, une électronique de commande qui présente une liaison de données sans contact vers un ordinateur central, et un entraînement avec des galets (3) par lesquels le véhicule (1) peut être déplacé sur le sol,
sachant que les véhicules (1) sont disposés de manière à pouvoir être déplacés à l'intérieur d'une installation le long d'une voie de circulation s'étendant en ligne droite ou en courbe,
sachant que dans une première étape, un premier véhicule (1) est déplacé jusqu'à un véhicule (1) respectivement voisin le long de la voie de circulation, et que dans une deuxième étape, l'objet pris en charge par le premier véhicule (1) est remis au véhicule (1) voisin le long de la voie de circulation,
sachant que dans une troisième étape, le premier véhicule (1) est déplacé jusqu'à l'autre véhicule (1) respectivement voisin le long de la voie de circulation,
sachant que les étapes sont répétées,
**caractérisé en ce que** le véhicule (1) présente sur son côté supérieur l'unité de transport (4), de sorte que l'objet est transporté plus loin sur le véhicule (1) respectivement voisin ou est pris en charge par ce dernier,
sachant qu'un des véhicules (1) présente sur son côté inférieur un enroulement secondaire (5) qui peut être couplé par induction à un conducteur primaire disposé sur le sol,
sachant qu'un condensateur est relié en série ou en parallèle à l'enroulement secondaire (5) de telle sorte que la fréquence de résonance correspondante est égale à la fréquence d'un courant alternatif injecté dans le conducteur primaire,
sachant qu'un bobinage (2) est disposé sur au moins une face latérale de chaque véhicule (1),
sachant que le véhicule (1) présente un premier accumulateur d'énergie,
sachant que l'énergie absorbée par le bobinage (2) d'un véhicule respectif (1) peut être transférée au premier accumulateur d'énergie du véhicule (1),
sachant qu'au moins l'entraînement du véhicule (1) peut être alimenté à partir du premier accumulateur d'énergie,
sachant que lors de la rencontre de véhicules voisins (1), de l'énergie est transférée d'un premier des deux véhicules (1) qui se rencontrent à l'autre véhicule (1) au moyen des bobinages (2) qui sont alors couplés par induction.

2. Procédé selon la revendication 1, **caractérisé en ce qu'**un bobinage (2) est disposé sur au moins une face latérale de chaque véhicule (1),
sachant que le véhicule (1) présente un premier accumulateur d'énergie et un accumulateur d'énergie supplémentaire,
sachant que l'énergie absorbée par le bobinage (2) peut être transférée à l'accumulateur d'énergie supplémentaire,
sachant qu'au moins l'entraînement du véhicule (1) peut être alimenté à partir de l'accumulateur d'énergie,
sachant que l'énergie de l'accumulateur d'énergie supplémentaire peut être transférée au premier accumulateur d'énergie et/ou à l'entraînement.

3. Procédé selon au moins une des revendications précédentes, **caractérisé en ce que** l'accumulateur d'énergie supplémentaire présente un courant de charge maximal admissible au moins dix fois supérieur à celui du premier accumulateur d'énergie du véhicule (1),
sachant que le premier accumulateur d'énergie est une batterie ou un accumulateur.

4. Procédé selon au moins une des revendications précédentes, **caractérisé en ce qu'**un convoi de véhicules (1) est formé afin de résoudre une tâche logistique commune,
sachant que l'énergie provenant de l'accumulateur d'énergie d'un véhicule (1) du convoi est transférée à un autre véhicule (1) du convoi,
sachant que le flux d'énergie passe par l'intermédiaire de couplages par induction entre les véhicules (1) du convoi,
et **en ce que** deux véhicules (1) ou davantage sont déplacés de manière synchronisée le long de la voie de circulation,
sachant qu'un des véhicules (1) du convoi joue le rôle de maître et que les autres véhicules (1) du convoi jouent le rôle d'esclaves.

5. Procédé selon au moins une des revendications précédentes, **caractérisé en ce que** la quantité totale d'énergie accumulée dans les accumulateurs d'énergie des véhicules (1) du convoi suffit pour la réalisation par les véhicules (1) du convoi du déplacement en direction du véhicule voisin (1),

6. Procédé selon au moins une des revendications précédentes, **caractérisé en ce que** la puissance électrique transmise par un conducteur primaire à un véhicule (1) ou à plusieurs véhicules (1) correspond à la puissance nécessaire pour la réalisation de la tâche logistique par les véhicules (1) du convoi, ou la dépasse.

7. Procédé selon au moins une des revendications précédentes, **caractérisé en ce que** la puissance électrique transmise par un conducteur primaire à un véhicule (1) ou à plusieurs véhicules (1) suffit à la puissance nécessaire pour la réalisation de la tâche logistique par les véhicules (1) du convoi, en tenant compte de la puissance pouvant être délivrée par les accumulateurs d'énergie des véhicules (1) du convoi.

8. Véhicule (1) pour la mise en oeuvre d'un procédé selon au moins une des revendications précédentes,
sachant que des moyens d'entraînement sont disposés sur le côté inférieur,
**caractérisé en ce qu'**un bobinage (2) est disposé sur au moins une face latérale.

9. Véhicule (1) selon au moins une des revendications précédentes, **caractérisé en ce que** les moyens d'entraînement présentent au moins une roue ou un galet (3), qui peut être entraîné(e) par un moteur électrique qui est disposé sur le véhicule (1).

10. Véhicule (1) selon au moins une des revendications précédentes, **caractérisé en ce que** le moteur électrique peut être alimenté par un convertisseur qui peut être alimenté à partir d'un accumulateur d'énergie, sachant en particulier que l'accumulateur d'énergie et le convertisseur sont disposés sur le véhicule (1).

11. Véhicule (1) selon au moins une des revendications précédentes, **caractérisé en ce que** l'unité de transport (4) présente un transporteur à rouleaux.

12. Véhicule (1) selon au moins une des revendications précédentes, **caractérisé en ce que** l'axe d'enroulement du bobinage (2) est orienté perpendiculairement à la direction normale de la surface du sol sur lequel le véhicule peut être déplacé,
et **en ce qu'**au moins deux, trois ou quatre bobinages (2) sont disposés sur le véhicule (1), dont les axes d'enroulement se situent dans un même plan,
et **en ce qu'**un des bobinages (2) peut être alimenté par un convertisseur en courant alternatif qui peut être alimenté à partir de l'accumulateur d'énergie,
sachant que le convertisseur est un convertisseur c.c.-c.a.

13. Véhicule (1) selon au moins une des revendications précédentes, **caractérisé en ce que** le premier accumulateur d'énergie présente une batterie et/ou un accumulateur et l'accumulateur d'énergie supplémentaire présente un condensateur, un condensateur à couche double et/ou un condensateur à grande puissance (« ultracap »).

14. Véhicule (1) selon au moins une des revendications précédentes, **caractérisé en ce qu'**un convertisseur c.a.-c.c., comprenant un redresseur, peut être alimenté à partir d'un des bobinages (2), de sorte que l'accumulateur d'énergie peut être rechargé et/ou que le moteur alimenté par convertisseur peut être alimenté,
et **en ce que** des commutateurs sont disposés dans le véhicule (1), au moyen desquels le sens du flux d'énergie entre le bobinage (2) et l'accumulateur d'énergie peut être commandé,
sachant que le bobinage (2) et l'accumulateur d'énergie sont reliés par l'intermédiaire d'un onduleur régénérateur, sachant que l'onduleur régénérateur présente deux demi-ponts qui présentent respectivement un commutateur à semi-conducteur de puissance supérieur et un commutateur à semi-conducteur de puissance inférieur, sachant qu'une diode est reliée en parallèle avec chaque commutateur,
sachant que les commutateurs à semi-conducteur de puissance peuvent être asservis par modulation de largeur d'impulsion par une électronique de commande du véhicule (1),
et **en ce que** le bobinage (2) présente un tore de ferrite,
sachant que le tore de ferrite est disposé de telle sorte dans le véhicule (1), et les branches du tore de ferrite sont orientées par rapport à la face extérieure du véhicule (1) de telle sorte, qu'avec une orientation correspondante d'un autre véhicule (1) doté d'un tel tore de ferrite, on peut obtenir dans le tore de ferrite un guidage fermé d'un champ magnétique produit par un bobinage (2) du véhicule (1) ou de l'autre véhicule (1), sans entrefer ou avec un entrefer minime,
et **en ce que** le véhicule (1) présente un système de détermination de position, en particulier un système comprenant un GPS, et/ou un système de reconnaissance d'images pour reconnaître des repères disposés dans l'installation,
et **en ce que** le véhicule (1) présente une liaison d'échange de données, en particulier une liaison de données sans contact, avec un ordinateur central de l'installation et/ou avec au moins un autre véhicule (1),
et **en ce que** le véhicule (1) présente sur le dessous un enroulement secondaire (5) qui peut être couplé par induction à un conducteur primaire disposé sur le sol, de sorte qu'un condensateur est relié en série ou en parallèle à l'enroulement secondaire (5) de telle sorte que la fréquence de résonance correspondante est égale à la fréquence d'un courant alternatif injecté dans le conducteur primaire.

15. Installation avec au moins un véhicule (1) selon au moins une des revendications précédentes, **caractérisée en ce qu'**un conducteur primaire est posé dans le sol en s'étendant en longueur, au moins également le long de la voie de circulation, de sorte que le véhicule (1) peut être alimenté par induction à partir du conducteur primaire pendant la marche.
